# EUROPEAN PATENT APPLICATION

(11) **EP 4 184 694 A1**
(43) Date of publication of application: **24.05.2023**
(21) Application number: 21943335.6
(22) Date of filing: 28.09.2021
(51) Int. Cl.: H01M 50/342, H01M 50/147, H01M 50/249, H01M 50/258

(54) **BATTERY CELL, BATTERY, ELECTRIC DEVICE, AND METHOD AND DEVICE FOR MANUFACTURING BATTERY CELL**

(71) Applicant: Contemporary Amperex Technology Co., Limited, Ningde City, Fujian 352100 (CN)
(72) Inventor: ZHOU, Wenlin, Ningde Fujian 352100 (CN); LI, Quankun, Ningde Fujian 352100 (CN); WANG, Peng, Ningde Fujian 352100 (CN); JIN, Haizu, Ningde Fujian 352100 (CN)
(74) Representative: Rowlands, Stuart Michael
(86) International application number: PCT/CN2021/121406
(87) International publication number: WO 2023/050080

(57) **Abstract**

Embodiments of this application provide a battery cell, a battery, an electric device, and a method and device for manufacturing battery cell. The battery cell includes an electrode assembly; and a housing configured to accommodate the electrode assembly, where a first wall of the housing includes a first body and a mounting body connected to the first body, the mounting body is provided with a pressure relief mechanism, and the pressure relief mechanism is configured to be actuated when internal pressure or temperature of the battery cell reaches a threshold, so as to relieve the pressure; in a thickness direction of the first wall, at least part of the mounting body protrudes out of a surface of the first body facing the electrode assembly in a direction approaching the electrode assembly; and a minimum distance between the pressure relief mechanism and the electrode assembly is less than a minimum distance between the first body and the electrode assembly. The battery cell, battery, electric device, and method and device for manufacturing battery cell provided in this application can enhance safety of batteries.

## Description

### TECHNICAL FIELD

This application relates to the field of battery technologies, and in particular, to a battery cell, a battery, an electric device, and a method and device for manufacturing battery cell.

### BACKGROUND

Energy conservation and emission reduction are critical to sustainable development of the automobile industry. In this context, electric vehicles, with their advantages in energy conservation and emission reduction, have become an important part of sustainable development of the automobile industry. For electric vehicles, battery technology is an important factor in connection with their development.

In the development of battery technology, in addition to performance improvement, safety is another non-negligible issue. If the safety of a battery cannot be guaranteed, the battery cannot be used. Therefore, how to enhance safety performance of batteries is an urgent technical problem that needs to be solved in battery technology.

### SUMMARY

This application provides a battery cell, a battery, an electric device, and a method and device for manufacturing battery cell, so as to enhance safety of batteries.

According to a first aspect, a battery cell is provided, including: an electrode assembly; and a housing configured to accommodate the electrode assembly, where a first wall of the housing includes a first body and a mounting body connected to the first body, the mounting body is provided with a pressure relief mechanism, and the pressure relief mechanism is configured to be actuated when internal pressure or temperature of the battery cell reaches a threshold, so as to relieve the pressure; in a thickness direction of the first wall, at least part of the mounting body protrudes out of a surface of the first body facing the electrode assembly in a direction approaching the electrode assembly; and a minimum distance between the pressure relief mechanism and the electrode assembly is less than a minimum distance between the first body and the electrode assembly.

Therefore, in the battery cell in the embodiments of this application, the pressure relief mechanism is closer to the electrode assembly than other areas of the first body of the first wall. In this way, a probability that the pressure relief mechanism is subjected to impact from an external force is reduced. Even if the first wall is placed facing the bottom of a box of a battery, that is, the battery cell is borne by the first wall, the pressure relief mechanism is closer to inside of the battery cell than other areas of the first wall and therefore farther away from the bottom of the box of the battery. This can reduce a probability that the pressure relief mechanism is directly impacted by external force from the bottom of the box, and thus prevent failure of the pressure relief mechanism caused by impact from the external force as far as possible.

In some embodiments, thickness of at least part of the mounting body is greater than that of the first body.

In this way, even if an area in which the pressure relief mechanism is located is subjected to external force, a probability that the pressure relief mechanism is damaged is reduced because the large thickness of the area in which the pressure relief mechanism is located brings enhanced strength, thereby further enhancing safety of the pressure relief mechanism.

In some embodiments, the mounting body includes a mounting portion and a connecting portion, where the mounting portion is configured for mounting the pressure relief mechanism, and thickness of the mounting portion is greater than that of the connecting portion; and the connecting portion is configured to connect the mounting portion and the first body.

If the first wall deforms under the action of external force, then around the pressure relief area, the connecting portion connecting to the first body can be used as a main area to bear the force. As the pressure relief mechanism is disposed at an end, close to the electrode assembly, of the mounting portion with a large thickness, the protection of the mounting portion makes the pressure relief mechanism subjected to less force and therefore less affected by deformation of the first wall, effectively enhancing safety and reliability of the pressure relief mechanism.

In some embodiments, the mounting body is provided with a pressure relief hole, and the pressure relief mechanism covers the pressure relief hole and is configured to be actuated when internal pressure or temperature of the battery cell reaches the threshold, so as to relieve the pressure via the pressure relief hole.

In some embodiments, the mounting body is provided with a first depression, where the first depression is recessed from a surface of the mounting body facing the electrode assembly in a direction leaving the electrode assembly, and at least part of the pressure relief mechanism is accommodated in the first depression.

In some embodiments, a bottom face of the first depression is closer to the electrode assembly than the surface of the first body facing the electrode assembly, guaranteeing that thickness of an area, of the mounting portion, in which the pressure relief mechanism is provided is greater than that of the first body, so as to guarantee strength of the mounting portion, thereby enhancing safety of the pressure relief mechanism.

In some embodiments, a bottom face of the first depression is provided with the pressure relief hole.

In some embodiments, the battery cell further includes a protective piece disposed on a side of the pressure relief hole facing away from the electrode assembly and configured to protect the pressure relief mechanism.

In some embodiments, a side of the mounting body facing away from the electrode assembly is provided with a protrusion surrounding the pressure relief hole, the protrusion protrudes out of a surface of the mounting body facing away from the electrode assembly in a direction leaving the electrode assembly, and the protective piece is disposed on a surface of the protrusion facing away from the electrode assembly, facilitating processing and mounting.

In some embodiments, the mounting body is provided with a second depression, the second depression is recessed from the surface of the mounting body facing away from the electrode assembly in a direction approaching the electrode assembly, the pressure relief hole runs through the bottom face of the first depression and a bottom face of the second depression, and the protrusion is located on the bottom face of the second depression.

In some embodiments, height of the protrusion is less than depth of the second depression.

Therefore, a surface of the protective piece away from the electrode assembly is within an outer surface of the first body, without affecting mounting of other components at an end of a cover plate away from the electrode assembly, thereby facilitating processing and mounting.

In some embodiments, the mounting body and the first body are an integrally formed structure.

For example, the mounting body may be formed through integral stamping so as to simplify the manufacture process.

In some embodiments, the mounting body and the first body may alternatively be separate components. In this way, the mounting body can be disposed more flexibly, thereby improving performance of the mounting body.

In some embodiments, the mounting body includes a mounting portion and a connecting portion, where the mounting portion is configured for mounting the pressure relief mechanism, the connecting portion is configured to connect the mounting portion and the first body, and thickness of the connecting portion increases gradually from the first body to the mounting portion.

To be specific, the connecting portion has a slope from the mounting portion to the first body. When the first wall is subjected to external force, the slope can experience uniform force, preventing deformation and fracture caused by concentrated force acting on an area, thereby improving safety performance.

In some embodiments, the first wall further includes a second body, where the second body is connected to the first body, the first body protrudes relative to the second body in a direction leaving the electrode assembly, and a recessed area is formed on the same side facing the electrode assembly, where the recessed area is configured for accommodating at least part of the pressure relief mechanism and the mounting body.

In some embodiments, the electrode assembly includes a body portion and a tab; and the first wall is provided with an electrode terminal, where the electrode terminal is configured to be electrically connected with the tab, and the recessed area is further configured for accommodating at least part of the tab.

The recessed area can reduce space occupied by the pressure relief mechanism and the tab in the housing body, making more space for the body portion of the electrode assembly, thereby increasing energy density of the battery cell.

In some embodiments, in the thickness direction, a minimum distance between the surface of the mounting body facing the electrode assembly and the body portion is a first distance, and a minimum distance between a surface of the second body facing the electrode assembly and the body portion is a second distance, where the second distance is less than or equal to the first distance.

A surface of the pressure relief mechanism facing the electrode assembly is within an inner surface of the second body, so that the pressure relief mechanism causes no effect on the space for the body portion of the electrode assembly, making more space for the body portion of the electrode assembly, thereby helping increase energy density of the battery cell.

In some embodiments, the housing includes: a housing body, where the housing body is provided with an opening, and the electrode assembly is accommodated in the housing body; and a cover plate configured to cover the opening, where the first wall is the cover plate.

According to a second aspect, a battery is provided, including: the battery cell of the first aspect; and a box configured to accommodate a number of such battery cells.

According to a third aspect, an electric device is provided, including the battery according to the second aspect, where the battery is configured to provide electric energy for the electric device.

In some embodiments, the electric device may be a vehicle, a ship, or a spacecraft.

According to a fourth aspect, a method for manufacturing battery cell is provided, including: providing an electrode assembly; and providing a cover plate and a housing body, where the electrode assembly is accommodated in the housing body, the cover plate includes a first body and a mounting body connected to the first body, the mounting body is provided with a pressure relief mechanism, and the pressure relief mechanism is configured to be actuated when internal pressure or temperature of the battery cell reaches a threshold, so as to relieve the pressure; in a thickness direction of the cover plate, at least part of the mounting body protrudes out of a surface of the first body facing the electrode assembly in a direction approaching the electrode assembly; and a minimum distance between the pressure relief mechanism and the electrode assembly is less than a minimum distance between the first body and the electrode assembly.

According to a fifth aspect, a device for manufacturing battery cell is provided, including modules for performing the method of the fourth aspect.

### BRIEF DESCRIPTION OF DRAWINGS

FIG. 1 is a schematic structural diagram of a vehicle according to an embodiment of this application;
FIG. 2 is a schematic structural exploded view of a battery according to an embodiment of this application;
FIG. 3 is a schematic structural diagram of a battery module according to an embodiment of this application;
FIG. 4 is a schematic diagram of a battery cell according to an embodiment of this application;
FIG. 5 is an exploded view of a battery cell according to an embodiment of this application;
FIG. 6 is a schematic exploded view of a cover plate provided with a pressure relief mechanism according to an embodiment of this application;
FIG. 7 is a top view of the cover plate provided with a pressure relief mechanism according to an embodiment of this application;
FIG. 8 is a sectional view of the cover plate provided with a pressure relief mechanism according to an embodiment of this application;
FIG. 9 is a local enlarged view of the sectional view of the cover plate provided with a pressure relief mechanism according to an embodiment of this application;
FIG. 10 is a schematic sectional view of a mounting portion according to an embodiment of this application;
FIG. 11 is a schematic exploded view of another cover plate provided with a pressure relief mechanism according to an embodiment of this application;
FIG. 12 is a top view of the another cover plate provided with a pressure relief mechanism according to an embodiment of this application;
FIG. 13 is a sectional view of the another cover plate provided with a pressure relief mechanism according to an embodiment of this application;
FIG. 14 is a local enlarged view of the sectional view of the another cover plate provided with a pressure relief mechanism according to an embodiment of this application;
FIG. 15 is a schematic flowchart of a method for manufacturing battery cell according to an embodiment of this application; and
FIG. 16 is a schematic block diagram of a device for manufacturing battery cell according to an embodiment of this application.

The accompanying drawings are not drawn to scale.

### DESCRIPTION OF EMBODIMENTS

The following further describes the embodiments of this application in detail with reference to the accompanying drawings and implementations. The detailed description of embodiments and the accompanying drawings are intended to illustrate the principle of this application, rather than to limit the scope of this application, meaning this application is not limited to the embodiments described herein.

In the description of this application, it should be noted that, unless otherwise stated, "a plurality of" means at least two; and the orientations or positional relationships indicated by the terms "upper", "lower", "left", "right", "inside", "outside", and the like are merely for ease and brevity of description of this application rather than indicating or implying that the apparatuses or components mentioned must have specific orientations or must be constructed or manipulated according to specific orientations. These terms shall therefore not be construed as limitations on this application. In addition, the terms "first", "second", and "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all refer to the orientations as shown in the drawings, and do not limit the specific structure of this application. In the description of this application, it should also be noted that unless otherwise specified and defined explicitly, the terms "mount", "connect", and "join" should be understood in their general senses. For example, they may refer to a fixed connection, a detachable connection, or an integral connection, and may refer to a direct connection or an indirect connection via an intermediate medium. A person of ordinary skill in the art can understand specific meanings of these terms in this application as appropriate to specific situations.

In the embodiments of this application, the same reference signs denote the same components. For brevity, in different embodiments, detailed descriptions of the same components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell. The type of battery is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matters from affecting charging or discharging of the battery cell.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The part of positive electrode current collector not coated with the positive electrode active substance layer protrudes out of the part of positive electrode current collector coated with the positive electrode active substance layer and serves as a positive tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The part of negative electrode current collector not coated with the negative electrode active substance layer protrudes out of the part of negative electrode current collector coated with the negative electrode active substance layer and serves as a negative tab. The negative electrode current collector may be made of copper, and the negative electrode active substance may be carbon, silicon, or the like. To allow a large current to pass through without any fusing, a plurality of positive tabs are provided and stacked together, and a plurality of negative tabs are provided and stacked together. The separator may be made of polypropylene (polypropylene, PP), polyethylene (polyethylene, PE), or the like. In addition, the electrode assembly may be a winding structure or a laminated structure, but the embodiments of this application are not limited thereto.

For the development of battery technology, many design factors need to be considered, for example, performance parameters such as energy density, cycle life, discharge capacity, and charge and discharge rate, as well as safety of the battery.

For batteries, safety hazards mainly originate in charging and discharging. Therefore, in order to improve the safety performance of batteries, a pressure relief mechanism is often provided for battery cells. The pressure relief mechanism is an element or part that is actuated when internal pressure or temperature of the battery cell reaches a predetermined threshold, so as to relieve the internal pressure or temperature of the battery cell. The predetermined threshold may be adjusted according to different design requirements. The predetermined threshold may depend on the material used for one or more of the positive electrode plate, negative electrode plate, electrolyte, and separator in the battery cell. The pressure relief mechanism may employ an element or part sensitive to pressure or temperature such that the pressure relief mechanism is actuated when the internal pressure or temperature of the battery cell reaches the predetermined threshold, thereby forming a channel for relieving the internal pressure or temperature.

"Actuate" in this application means that the pressure relief mechanism is put into action such that the internal pressure or temperature of the battery cell is relieved. Said action of the pressure relief mechanism may include but is not limited to, for example, cracking, tearing, or melting at least part of the pressure relief mechanism. When the pressure relief mechanism is actuated, high-pressure and high-temperature substances inside the battery cell are discharged from the pressure relief mechanism as emissions. In this way, the battery cell can relieve its pressure under controllable pressure or temperature, thereby avoiding more serious potential incidents.

The emissions from the battery cell mentioned in this application include but are not limited to: electrolyte, fragments of positive and negative electrode plates and separator because of dissolution or breaking, high-temperature and high-pressure gases and flames produced by reactions, and the like.

The pressure relief mechanism in the battery cell greatly influences the safety of the battery. For example, when the battery cell is short-circuited or overcharged, thermal runaway may be caused inside the battery cell, resulting in a sudden rise in pressure or temperature. In this case, the pressure relief mechanism can be actuated to make the internal pressure and temperature discharge to the outside, thus preventing the battery cell from exploding and catching fire.

As the pressure relief mechanism needs to be opened in time when thermal runaway occurs inside the battery cell, an area around the pressure relief mechanism is generally weak. In this way, when the pressure relief mechanism is subjected to impact from an external force, its safety and reliability are poor with a risk of breakage, which may lead to electrolyte leakage of the battery cell. Especially, when a wall on which the pressure relief mechanism of the battery cell is located is placed downward, for example, when the pressure relief mechanism is disposed at the cover plate of the battery cell and the battery cell is placed upside down in the box of the battery, the cover plate at which the pressure relief mechanism is located needs to bear the weight of the entire battery cell. Therefore, the cover plate is subjected to great impact from the external force and therefore is prone to deform, and thus the pressure relief mechanism is subjected to increased impact from the external force and is more likely to deform and even break, thereby affecting safety and service life of the battery.

To resolve the foregoing problems, the embodiments of this application provide a battery cell. A first wall of a housing of the battery cell includes a first body and a mounting body connected to the first body, where the mounting body is provided with a pressure relief mechanism, and the pressure relief mechanism is configured to be actuated when internal pressure or temperature of the battery cell reaches a threshold, so as to relieve the pressure; in a thickness direction of the first wall, at least part of the mounting body protrudes out of a surface of the first body facing the electrode assembly in a direction approaching the electrode assembly; and a minimum distance between the pressure relief mechanism and the electrode assembly is less than a minimum distance between the first body and the electrode assembly.

In this way, a probability that the pressure relief mechanism is subjected to impact from an external force is reduced. Even if the first wall is placed downward, the pressure relief mechanism is closer to inside of the battery cell than other areas of the first wall and therefore farther away from the bottom of the box of the battery. This can reduce a probability that the pressure relief mechanism is directly impacted by external force from the bottom of the box, and thus prevent failure of the pressure relief mechanism caused by impact from the external force as far as possible.

The technical solution described in the embodiments of this application is applicable to a variety of electric devices using a battery.

The electric device may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

For ease of description, the electric device being a vehicle is used as example for description of the following embodiments.

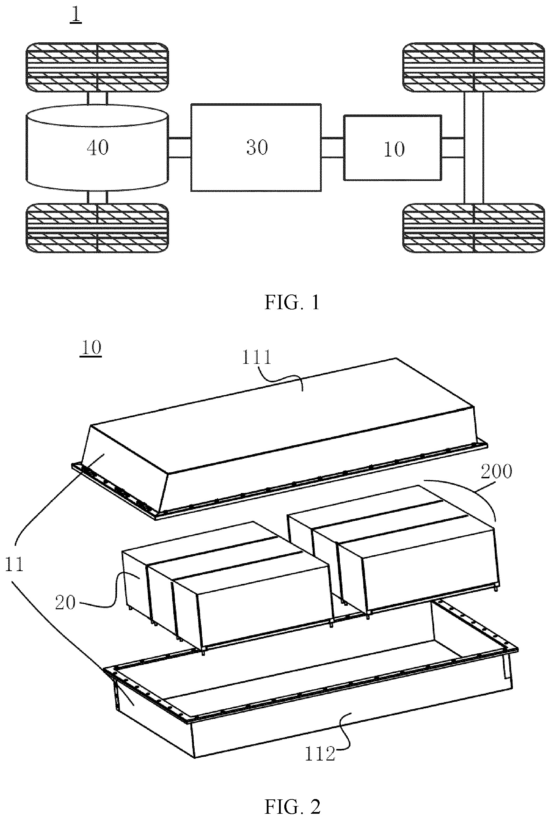

For example, FIG. 1 is a schematic structural diagram of a vehicle 1 according to an embodiment of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 40, a controller 30, and a battery 10 may be provided inside the vehicle 1, where the controller 30 is configured to control the battery 10 to supply power to the motor 40. For example, the battery 10 may be disposed at the bottom, front, or rear of the vehicle 1. The battery 10 may be configured to supply power to the vehicle 1. For example, the battery 10 may be used as an operational power source for the vehicle 1 which is configured for a circuit system of the vehicle 1, for example, to satisfy power needs of start, navigation, and running of the vehicle 1. In another embodiment of this application, the battery 10 can be used not only as the operational power source for the vehicle 1, but also as a driving power source for the vehicle 1, replacing or partially replacing fossil fuel or natural gas to provide driving traction for the vehicle 1.

To meet different power usage requirements, the battery may include a plurality of battery cells, and the plurality of battery cells may be connected in series, parallel, or series-parallel, where being connected in series-parallel means a combination of series and parallel connections. The battery may also be referred to as a battery pack. Optionally, a plurality of battery cells may be connected in series, parallel, or series-parallel to form a battery module first, and then a plurality of battery modules are connected in series, parallel, or series-parallel to form a battery. In a word, the plurality of battery cells may be directly combined into a battery, or may first be combined into battery modules which are then combined into a battery.

For example, FIG. 2 is a schematic structural diagram of a battery 10 according to an embodiment of this application. The battery 10 may include at least one battery module 200. The battery module 200 includes a plurality of battery cells 20. The battery 10 may further include a box 11. Inside of the box 11 is a hollow structure. The plurality of battery cells 20 are accommodated in the box 11. FIG. 2 shows a possible implementation of the box 11 in this embodiment of this application. As shown in FIG. 2, the box 11 may include two portions which are referred as a first portion 111 and a second portion 112 respectively, and the first portion 111 and the second portion 112 are snap-fitted. Shapes of the first portion 111 and the second portion 112 may be determined according to a shape of the combination of the battery module 200. At least one of the first portion 111 and the second portion 112 is provided with an opening. For example, as shown in FIG. 2, the first portion 111 and the second portion 112 each may be a hollow cuboid and have only one face with an opening, where an opening of the first portion 111 and an opening of the second portion 112 are opposite each other, and the first portion 111 and the second portion 112 are snap-fitted to form a box 11 having an enclosed chamber.

For another example, unlike FIG. 2, it is possible that only one of the first portion 111 and the second portion 112 is a hollow cuboid with an opening, and the other may be a plate for covering the opening. For example, an example is used where the second portion 112 is a hollow cuboid and has only one face with an opening and the first portion 111 is a plate. Therefore, the first portion 111 covers the opening of the second portion 112 to form a box 11 with an enclosed chamber. The chamber may be configured for accommodating the plurality of battery cells 20. The plurality of battery cells 20 are connected in series, parallel, or series-parallel and then placed into the box 11 formed after the first portion 111 and the second portion 112 are snap-fitted.

Optionally, the battery 10 may alternatively include other structures, which are not described herein one by one. For example, the battery 10 further includes a busbar, where the busbar is configured to implement electrical connection between the plurality of battery cells 20, for example parallel connection, series connection, or series-parallel connection. Specifically, the busbar may implement the electrical connection between the battery cells 20 by connecting electrode terminals of the battery cells 20. Further, the busbar may be fastened to the electrode terminals of the battery cells 20 by welding. Electrical energy of the plurality of battery cells 20 may be further led out by a conductive mechanism that passes through the box 11.

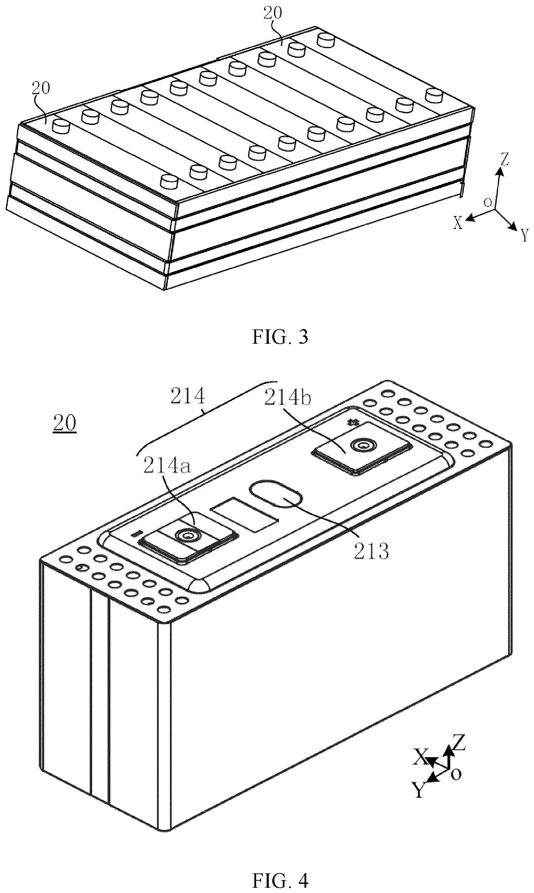

Depending on different power needs, battery cells 20 in the battery module 200 may be provided in any quantity. The plurality of battery cells 20 may be connected in series, parallel, or series-parallel to implement large capacity or high power. Because each battery 10 may include a large quantity of battery cells 20, for ease of installation, the battery cells 20 may be disposed by group, and each group of battery cells 20 form a battery module 200. The quantity of battery cells 20 included in the battery module 200 is not limited, and may be set as required. For example, FIG. 3 shows an example of the battery module 200. A battery may include a plurality of battery modules 200. These battery modules 200 may be connected in series, parallel, or series-parallel.

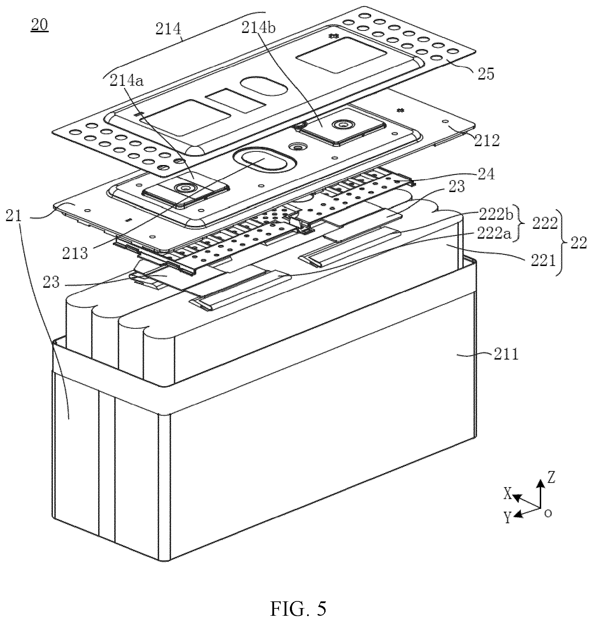

FIG. 4 is a schematic structural diagram of a battery cell 20 according to an embodiment of this application. FIG. 5 is a schematic structural exploded view of a battery cell 20 according to an embodiment of this application. As shown in FIG. 4 and FIG. 5, the battery cell 20 includes an electrode assembly 22, a housing body 211, a cover plate 212, and a pressure relief mechanism 213. The electrode assembly 22 is accommodated in the housing body 211. The cover plate 212 is configured to cover an opening of the housing body 211.

The housing body 211 is a component configured to accommodate the electrode assembly 22. The housing body 211 may be a hollow structure with an opening formed at one end; or the housing body 211 may be a hollow structure with openings formed at two opposite ends. If the housing body 211 is a hollow structure with an opening formed at one end, one cover plate 212 may be provided. If the housing body 211 is a hollow structure with openings formed at two opposite ends, two cover plates 212 may be provided, where the two cover plates 212 cover the openings at two ends of the housing body 211 respectively. The housing body 211 may be made of various materials, such as copper, iron, aluminum, steel, and aluminum alloy. The housing body 211 may have a variety of shapes, for example, cylinder, cuboid, or the like. For example, in FIG. 4 and FIG. 5, the housing body 211 is a cuboid structure. The housing body 211 is a hollow structure with an opening formed at one end.

In the battery cell 20, one or more electrode assemblies 22 may be provided in the housing body 211 based on actual use demands. As shown in FIG. 5, four separate electrode assemblies 22 are provided in the battery cell 20.

The electrode assembly 22 is a component in the battery cell 20 in which electrochemical reactions take place. The electrode assembly 22 may be cylindrical, cuboid, or the like. If the electrode assembly 22 is a cylindrical structure, the housing body 211 may also be a cylindrical structure. If the electrode assembly 22 is a cuboid structure, the housing body 211 may also be a cuboid structure. The electrode assembly 22 includes a tab 222 and a body portion 221, where the tab 222 of the electrode assembly 22 may include a positive electrode tab 222a and a negative electrode tab 222b. The positive electrode tab 222a may be formed by a part of a positive electrode plate not coated with a positive electrode active substance layer through stacking. The negative electrode tab 222b may be formed by a part of a negative electrode plate not coated with a negative electrode active substance layer through stacking. The body portion 221 may be formed by a part of the positive electrode plate coated with the positive electrode active substance layer and a part of the negative electrode plate coated with the negative electrode active substance layer through stacking or winding.

The cover plate 212 covers an opening of the housing body 211 to isolate an internal environment of the battery cell 20 from an external environment thereof. The cover plate 212 may match the housing body 211 in shape. As shown in FIG. 5, the housing body 211 is a cuboid structure. The cover plate 212 is a rectangular plate structure that matches the housing body 211. The cover plate 212 may also be made of various materials, such as copper, iron, aluminum, steel, and aluminum alloy. The cover plate 212 and the housing body 211 may be made of same or different materials.

The battery cell 20 may further include a cover plate attaching piece 25. The cover plate attaching piece 25 fits to an outer surface of the cover plate 212 to protect the cover plate. The battery cell 20 may further include a holder 24, where the holder 24 is located between the cover plate 212 and the electrode assembly 22 and is configured to separate the cover plate 212 and the electrode assembly 22.

The cover plate 212 may be provided with an electrode terminal 214, where the electrode terminal 214 is configured to be electrically connected with the electrode assembly 22 to output electric energy of the battery cell 20. The electrode terminal 214 may include a positive electrode terminal 214a and a negative electrode terminal 214b, where the positive electrode terminal 214a is configured to be electrically connected with the positive electrode tab 222a, and the negative electrode terminal 214b is configured to be electrically connected with the negative electrode tab 222b. The positive electrode terminal 214a may be directly or indirectly connected with the positive electrode tab 222a. The negative electrode terminal 214b may be directly or indirectly connected with the negative electrode tab 222b. For example, the positive electrode terminal 214a is electrically connected with the positive electrode tab 222a via a connecting member 23. The negative electrode terminal 214b is electrically connected with the negative electrode tab 222b via a connecting member 23.

The pressure relief mechanism 213 is a component configured to relieve internal pressure of the battery cell 20. When internal pressure or temperature of the battery cell 20 reaches a threshold, the internal pressure of the battery cell 20 is relieved by the pressure relief mechanism 213. Specifically, the pressure relief mechanism 213 is provided with an indentation groove. When the internal pressure or temperature of the battery cell 20 reaches the threshold, the pressure relief mechanism 213 is broken along the indentation groove to relieve the internal pressure. The following describes in detail specific structures and positions of the pressure relief mechanism 213 with reference to the accompanying drawings.

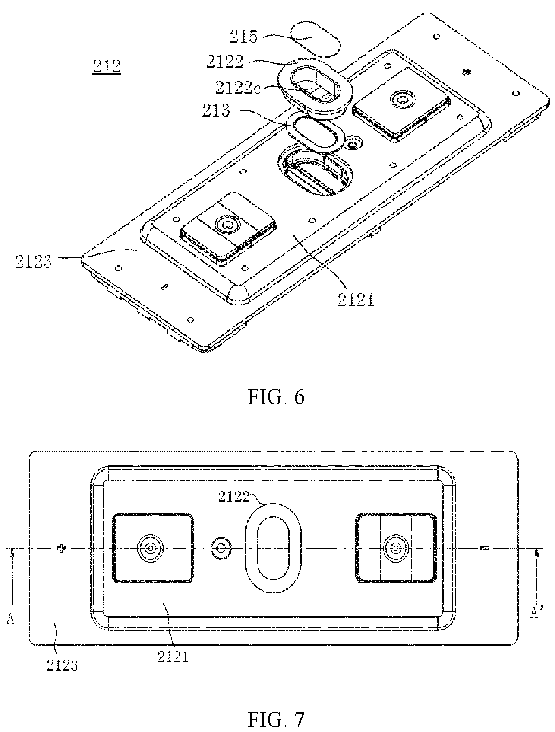

FIG. 6 is a schematic structural exploded view of a cover plate with a pressure relief mechanism according to an embodiment of this application. As shown in FIG. 5 and FIG. 6, the battery cell 20 in this embodiment of this application may include: an electrode assembly 22; and a housing 21 configured to accommodate the electrode assembly 22, where a first wall 212 of the housing 21 includes a first body 2121 and a mounting body 2122 connected to the first body 2121, the mounting body 2122 is provided with a pressure relief mechanism 213, and the pressure relief mechanism 213 is configured to be actuated when internal pressure or temperature of the battery cell reaches a threshold, so as to relieve the pressure; and in a thickness direction of the first wall 212, at least part of the mounting body 2122 protrudes out of a surface of the first body 2121 facing the electrode assembly 22 in a direction approaching the electrode assembly 22; and a minimum distance between the pressure relief mechanism 213 and the electrode assembly 22 is less than a minimum distance between the first body 2121 and the electrode assembly 22.

The first wall 212 of the housing 21 is provided with the pressure relief mechanism 213. The first wall 212 of the housing 21 may be a wall of the housing body 211, for example, a side wall or a bottom wall of the housing body 211. The pressure relief mechanism 213 may be a separate component welded onto the side wall or the bottom wall or may be a part of the side wall or the bottom wall. The first wall 212 of the housing 21 may alternatively be the cover plate 212, and the pressure relief mechanism 213 may be a separate component welded onto the cover plate 212 or may be a part of the cover plate 212. For ease of description, the following describes the first wall being the cover plate 212 as an example.

It should be understood that the pressure relief mechanism 213 in this embodiment of this application may be various possible pressure relief mechanisms 213. This is not limited in the embodiments of this application. For example, the pressure relief mechanism 213 may be a temperature-sensitive pressure relief mechanism, where the temperature-sensitive pressure relief mechanism is configured to be melted when internal temperature of the battery cell 20 with the pressure relief mechanism 213 reaches a threshold; and/or the pressure relief mechanism 213 may be a pressure-sensitive pressure relief mechanism, where the pressure-sensitive pressure relief mechanism is configured to be broken when the internal pressure of the battery cell 20 with the pressure relief mechanism 213 reaches the threshold.

The mounting body 2122 and the pressure relief mechanism 213 in this embodiment of this application may be an integrally formed structure or may be two separate components that are connected together through welding or other manners. The mounting body 2122 and the first body 2121 in this embodiment of this application may be an integrally formed structure or may be two separate components that are connected together through welding or other manners.

The pressure relief mechanism 213 is disposed on a side of the mounting body 2122 facing the electrode assembly 22, and a minimum distance between the pressure relief mechanism 213 and the electrode assembly 22 is less than a minimum distance between the first body 2121 and the electrode assembly 22, that is, the pressure relief mechanism 213 is disposed on the mounting body 2122, enabling the pressure relief mechanism 213 to be closer to the electrode assembly 22 than other areas of the first body 2121 of the first wall 212. Specifically, the minimum distance between the pressure relief mechanism 213 and the electrode assembly 22 in this embodiment of this application may represent a minimum distance between the pressure relief mechanism 213 and the electrode assembly 22 in a thickness direction, where the thickness direction is a thickness direction of the first wall 212, or the thickness direction is a direction perpendicular to a surface of the pressure relief mechanism 213 facing the electrode assembly 22. For example, in the thickness direction, if the pressure relief mechanism 213 corresponds to the body portion 221 of the electrode assembly 22, the minimum distance between the pressure relief mechanism 213 and the electrode assembly 22 is equal to a minimum distance between the pressure relief mechanism 213 and the body portion 221. For another example, in the thickness direction, if the pressure relief mechanism 213 corresponds to the tab 222, the minimum distance between the pressure relief mechanism 213 and the electrode assembly 22 is equal to a minimum distance between the pressure relief mechanism 213 and the tab 222.

Similarly, the minimum distance between the first body 2121 and the electrode assembly 22 in this embodiment of this application also represents the minimum distance between the first body 2121 and the electrode assembly 22 in the thickness direction. For example, in the thickness direction, if the first body 2121 corresponds to the body portion 221, the minimum distance between the first body 2121 and the electrode assembly 22 is equal to a minimum distance between the first body 2121 and the body portion 221. For another example, in the thickness direction, if the first body 2121 corresponds to the tab 222, the minimum distance between the first body 2121 and the electrode assembly 22 is equal to a minimum distance between the first body 2121 and the tab 222.

Therefore, the first wall 212 of the battery cell 20 in this embodiment of this application is provided with the pressure relief mechanism 213. The first wall 212 includes the first body 2121 and the mounting body 2122 that are connected with each other. At least part of the mounting body 2122 protrudes out of the first body 2121 in a direction approaching the electrode assembly 22, and the pressure relief mechanism 213 is disposed on a side of the mounting body 2133 facing the electrode assembly 22, meaning the pressure relief mechanism 213 is closer to the electrode assembly 22 than other areas of the first body 2121 of the first wall 212. In this way, a probability that the pressure relief mechanism 213 is subjected to impact from an external force is reduced. Even if the first wall 212 is placed facing the bottom of the box 11 of the battery 20, meaning the battery cell 20 is borne by the first wall 212, the pressure relief mechanism 213 is closer to inside of the battery cell 20 than other areas of the first wall 212 and therefore farther away from the bottom of the box 11 of the battery 10. This can reduce a probability that the pressure relief mechanism 213 is directly impacted by external force from the bottom of the box 11, and thus prevent failure of the pressure relief mechanism 213 caused by impact from the external force as far as possible.

Further, thickness of at least part of the mounting body 2122 in this embodiment of this application is greater than that of the first body 2121, that is, the mounting body 2122 provided with the pressure relief mechanism 213 has a large thickness. In this way, even if an area, of the mounting body 2122, in which the pressure relief mechanism 213 is located is subjected to external force, a probability that the pressure relief mechanism 213 is damaged is reduced because the large thickness of the area brings enhanced strength, thereby further enhancing safety of the pressure relief mechanism 213.

The following describes the mounting body 2122 and the first body 2121 first with reference to the accompanying drawings.

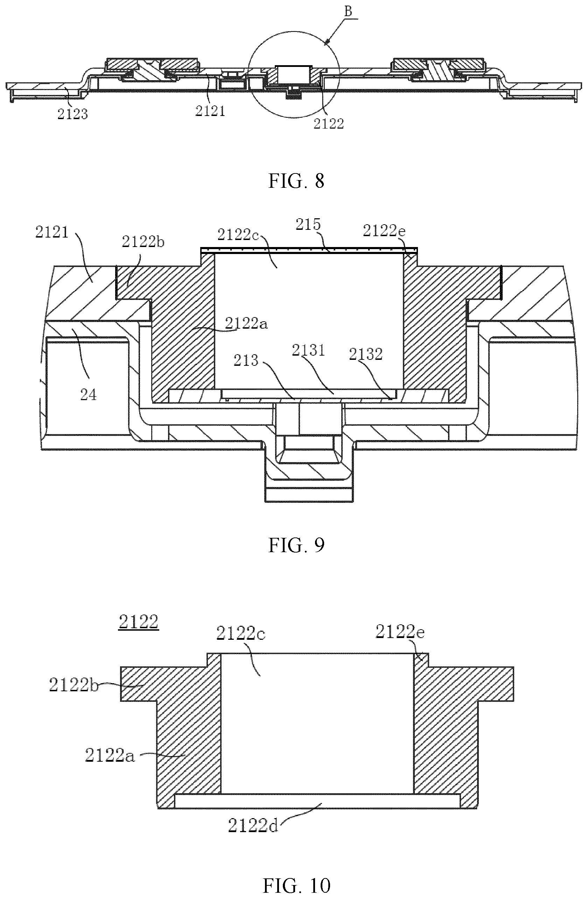

Optionally, as an embodiment, the mounting body 2122 and the first body 212 may be two separate components. For example, the mounting body 2122 and the first body 2121 shown in FIG. 6 are separate components. FIG. 7 is a top view of a cover plate 212 provided with a pressure relief mechanism 213, corresponding to FIG 6. FIG. 8 is a schematic sectional view along direction A-A' shown in FIG. 7. FIG. 9 is a local enlarged view of area B shown in FIG. 8. FIG. 10 is a schematic diagram of the mounting body 2122 in FIG. 9.

As shown in FIG. 6 to FIG. 10, the mounting body 2122 includes a mounting portion 2122a and a connecting portion 2122b. The mounting portion 2122a is configured for mounting the pressure relief mechanism 213. The connecting portion 2122b is configured to connect the mounting portion 2122a and the first body 2121. In addition, in this embodiment of this application, thickness of the mounting portion 2122a provided with the pressure relief mechanism 213 is greater than that of the connecting portion 2122b, and thickness of the mounting portion 2122a is greater than that of the first body 2121.

Specifically, as shown in FIG. 6 to FIG. 10, the connecting portion 2122b in this embodiment of this application may be located at an end of the mounting portion 2122a away from the electrode assembly 22. The connecting portion 2122b may be a lug boss structure protruding out of the mounting portion 2122a. Correspondingly, the first body 2121 of the cover plate 212 is also provided with a corresponding lug boss structure, so that the connecting portion 2122b may be in fit connection with the lug boss structure of the first body 2121, for example, the connecting portion 2122b may be connected to the lug boss structure of the first body 2121 through welding. A bold solid line in FIG. 9 may be a welding point, but the embodiments of this application are not limited thereto.

It should be understood that when the mounting body 2122 in this embodiment of this application is disposed in manners shown in FIG. 6 to FIG. 10, in one aspect, the pressure relief mechanism 213 is closer to the electrode assembly 22 than the outer surface of the first body 2121, so that a possibility is reduced that the cover plate 212 affects the pressure relief mechanism 213 when experiencing external force; in another aspect, if the cover plate 212 deforms under the action of external force, then around the pressure relief area, an area in which the connecting portion 2122b is in contact with the first body 2121 can be used as a main area to bear the force, and as the pressure relief mechanism 213 is disposed at an end, close to the electrode assembly 22, of the mounting portion 2122a with a larger thickness, the protection of the mounting portion 2122a makes the pressure relief mechanism 213 subjected to less force and therefore less affected by deformation of the cover plate 212, effectively enhancing safety and reliability of the pressure relief mechanism 213.

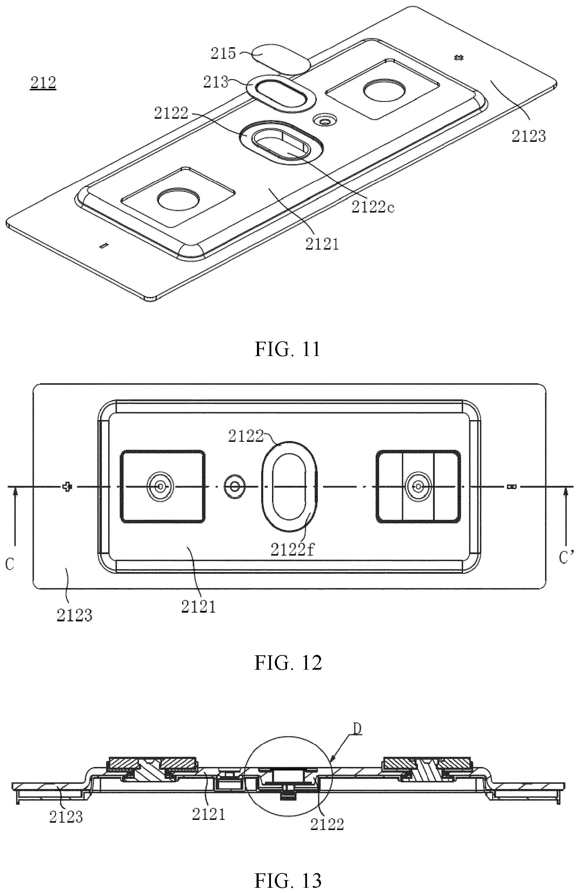

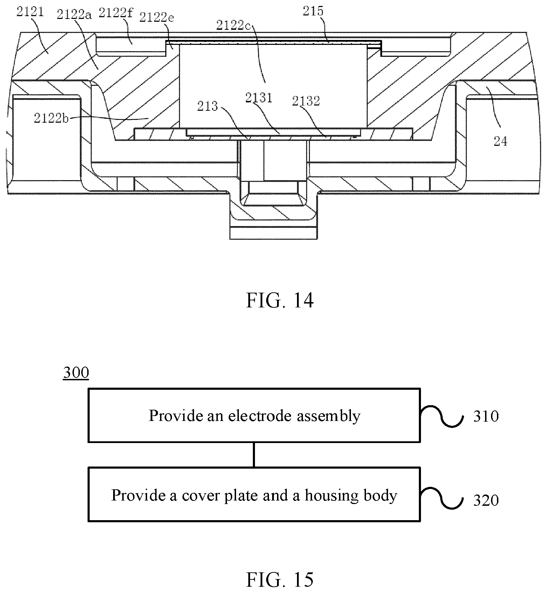

Optionally, as another embodiment, the mounting body 2122 and the first body 2121 may alternatively be an integrated structure. FIG. 11 is a schematic structural exploded view of the pressure relief mechanism 213 and the cover plate 212. FIG. 12 is a top view of the cover plate 212 provided with the pressure relief mechanism 213 corresponding to FIG. 11. FIG. 13 is a schematic sectional view along direction C-C' shown in FIG. 12. FIG. 14 is a local enlarged view of area D shown in FIG. 13.

As shown in FIG. 11 to FIG. 14, the mounting body 2122 includes a mounting portion 2122a and a connecting portion 2122b. The mounting portion 2122a is configured for mounting the pressure relief mechanism 213. The connecting portion 2122b is configured to connect the mounting portion 2122a and the first body 2121. The mounting body 2122 and the first body 2121 are an integrally formed structure. For example, the mounting body 2122 in this embodiment of this application may be formed on the cover plate 212 through manners such as stamping. Therefore, the first body 2121, the connecting portion 2122b, and the mounting portion 2122a are three areas connecting to each other on the cover plate 212. However, the first body 2121, the connecting portion 2122b, and the mounting portion 2122a have different thicknesses. Thickness of the mounting portion 2122a provided with the pressure relief mechanism 213 is greater than that of the connecting portion 2122b, and thickness of the mounting portion 2122a is greater than that of the first body 2121.

Specifically, as shown in FIG. 11 to FIG. 14, the connecting portion 2122b is located between the first body 2121 and the mounting portion 2122a. Thickness of the connecting portion 2122b is relatively small. For example, the thickness of the connecting portion 2122b increases gradually from the first body 2121 to the mounting portion 2122a to form a slope, but the embodiments of this application are not limited thereto. For the slope of the connecting portion 2122b from the mounting portion 2122a to the first body 2121, when the first wall 212 is subjected to external force, the slope can experience approximately uniform force, preventing deformation and fracture caused by concentrated force acting on an area, thereby improving safety performance.

Similar to the embodiments shown in FIG. 6 to FIG. 10, when the mounting body 2122 in this embodiment of this application is disposed in manners shown in FIG. 11 to FIG. 14, in one aspect, the pressure relief mechanism 213 is closer to the electrode assembly 22 than the outer surface of the first body 2121, so that a possibility is reduced that the cover plate 212 affects the pressure relief mechanism 213 when experiencing external force; in another aspect, if the cover plate 212 deforms under the action of external force, then around the pressure relief area, then around the pressure relief area, the connecting portion 2122b with a smaller thickness can be used as a main area to bear the force, and as the pressure relief mechanism 213 is disposed at an end, close to the electrode assembly 22, of the mounting portion 2122a with a larger thickness, the larger thickness of the mounting portion 2122a brings greater strength, guaranteeing that the pressure relief mechanism 213 is subjected to less force so that the pressure relief mechanism 213 is less affected by deformation of the cover plate 212, effectively enhancing safety and reliability of the pressure relief mechanism 213.

The foregoing describes in detail the relationship between the mounting body 2122 and the first body 2121 in this embodiment of this application with reference to the accompanying drawings. The following describes in detail arrangement of the pressure relief mechanism 213 in this embodiment of this application with reference to FIG. 6 to FIG. 14.

It should be understood that the mounting body 2122 in this embodiment of this application is provided with a pressure relief hole 2122c. The pressure relief mechanism 213 is configured to be actuated when internal pressure or temperature in the battery cell reaches the threshold, so as to relieve the pressure via the pressure relief hole 2122c. For example, the pressure relief mechanism 213 may be disposed at an end of the pressure relief hole 2122c close to the electrode assembly 22 so as to cover the pressure relief hole 2122c.

Specifically, as shown in FIG. 6 to FIG. 14, the mounting body 2122 is provided with a first depression 2122d, where the first depression 2122d is recessed from a surface of the mounting body 2122 facing the electrode assembly 22 in a direction leaving the electrode assembly 22, and at least part of the pressure relief mechanism 213 is accommodated in the first depression 2122d. A bottom face of the first depression 2122d is provided with the pressure relief hole 2122c, so that the pressure relief mechanism 213 accommodated in the first depression 2122d is able to cover the pressure relief hole 2122c.

It should be understood that the bottom face of the first depression 2122d in this embodiment of this application is closer to the electrode assembly 22 than the surface of the first body 2121 facing the electrode assembly 22, guaranteeing that thickness of an area, of the mounting portion 2122, in which the pressure relief mechanism 213 is disposed is greater than that of the first body 2121, so as to guaranteeing strength of the mounting portion 2122, thereby enhancing safety of the pressure relief mechanism 213.

It should be understood that to guarantee that the pressure relief mechanism 213 can be broken to relieve internal pressure of the battery cell 20 when thermal runaway occurs inside the battery cell 20, a given gap is left between the surface of the pressure relief mechanism 213 facing the electrode assembly and the holder under the pressure relief mechanism 213, to provide a deformation space for the pressure relief mechanism 213.

In addition, the pressure relief mechanism 213 may further be provided with a first groove 2131, where the first groove 2131 has a small thickness, helping the pressure relief mechanism 213 to be broken when thermal runaway occurs inside the battery cell 20. Further, a second groove 2132 may further be provided in the first groove 2131. The second groove 2132 may be an indentation provided in a bottom wall of the first groove 2131, enabling an area with the smallest thickness of the pressure relief mechanism 213 to be an area provided with the second groove 2132. In this way, the pressure relief mechanism 213 is broken from the second groove 2132 when thermal runway occurs in the battery cell 20, that is, a broken position may be prearranged, enhancing flexibility and reliability of the pressure relief mechanism 213.

Optionally, an opening of the first groove 2131 and an opening of the second groove 2132 may be arranged facing away from the electrode assembly 22, preventing the first groove 2131 and the second groove 2132 from being corroded by the electrolyte in the battery cell 20, thereby prolonging service life of the pressure relief mechanism 213.

In this embodiment of this application, the battery cell 20 may further include a protective piece 215, where the protective piece 215 is disposed on a side of the pressure relief hole 2122c facing away from the electrode assembly 22 and configured to protect the pressure relief mechanism 213, for example, protect the pressure relief mechanism 213 from damage of object particles.

It should be understood that the protective piece 215 in this embodiment of this application may be disposed on a protrusion structure so as to facilitate the ease of mounting and fixing. Specifically, as shown in FIG. 6 to FIG. 14, a side of the mounting body 2122 facing away from the electrode assembly 22 is provided with a protrusion 2122e surrounding the pressure relief hole 2122c, where the protrusion 2122e protrudes out of a surface of the mounting body 2122 facing away from the electrode assembly 22 in a direction leaving the electrode assembly 22. The protective piece 215 is disposed on a surface of the protrusion 2122e facing away from the electrode assembly 22.

Optionally, the mounting body 2122 in this embodiment of this application may further be provided with a second depression 2122f, where the second groove 2122f is recessed from the surface of the mounting body 2122 facing away from the electrode assembly 22 in a direction approaching the electrode assembly 22. The pressure relief hole 2122c runs through the bottom face of the first depression 2122d and a bottom face of the second depression 2122f. The protrusion 2122e is located on the bottom face of the second depression 2122f. For example, as shown in FIG. 10 to FIG. 14, the second depression 2122f surrounds the pressure relief hole 2122c, so that the protrusion 2122e is convex relative to a bottom wall of the second depression 2122f, and the protective piece 215 is disposed on a surface of the protrusion 2122e facing away from the electrode assembly 22.

With the second depression 2122f provided, height of the protrusion 2122e is less than depth of the second depression 2122f. For example, as shown in FIG. 10 to FIG. 14, a surface of the protective piece 215 away from the electrode assembly 22 is within an outer surface of the first body 2121, without affecting mounting of other components at an end of the cover plate 212 away from the electrode assembly 22, thereby facilitating processing and mounting.

In this embodiment of this application, the first body 2121 of the cover plate 212 may further be provided with an electrode terminal 214. Given that, a tab 222 and a connecting member 23 are also disposed between the body portion 221 of the electrode assembly 22 and the electrode terminals 24. If the tab 222 is disposed in the housing body 211, the tab 222 needs to occupy part of space inside the housing body 211, so that space inside the housing body 211 provided for the body portion 221 of the electrode assembly 22 is reduced, resulting in decreased energy density of the battery cell 20.

In view of this, as shown in FIG. 6 to FIG. 14, the first wall 212 in this embodiment of this application may further include a second body 2123, where the second body 2123 is connected to the first body 2121. For example, the second body 2123 is located at an outer edge of the first body 2121. The first body 2121 protrudes relative to the second body 2123 in a direction leaving the electrode assembly 22, and a recessed area is formed on the same side facing the electrode assembly 22, where the recessed area is configured for accommodating the pressure relief mechanism 213, at least part of the tab 222, and at least part of the mounting body 2122.

Optionally, to more fully use internal space of the housing body 211 for accommodating the body portion 211 of the electrode assembly 22, the recessed area may be configured for accommodating the entire pressure relief mechanism 213, the tab 222 and the mounting body 2122. For example, as shown in FIG. 6 to FIG. 14, in the thickness direction of the first wall 212, for the pressure relief mechanism 213 in the recessed area, a minimum distance between the surface of the mounting body 2122 facing the electrode assembly 22 and the body portion 221 is a first distance. For example, the first distance may be a distance between the pressure relief mechanism 213 and the body portion 221, and a minimum distance between a surface of the second body 2123 facing the electrode assembly 22 and the body portion 221 is a second distance, where the second distance is less than or equal to the first distance. That is, a surface of the pressure relief mechanism 213 facing the electrode assembly 22 is within an inner surface of the second body 2123, so that the pressure relief mechanism 213 causes no effect on the space for the body portion 221 of the electrode assembly 22, making more space for the body portion 221 of the electrode assembly 22, thereby helping increase energy density of the battery cell 20.

The battery cell, the battery, and the electric device in the embodiments of this application are described above, and a method and device for manufacturing battery cell in the embodiments of this application are described below. For content that is not described in detail, refer to the foregoing embodiments.

FIG. 15 is a schematic flowchart of a method 300 for manufacturing battery cell 20 according to an embodiment of this application. As shown in FIG. 15, the method 300 may include: S310. Provide an electrode assembly 22. S320. Provide a housing body 211 and a cover plate 212. The electrode assembly 22 is accommodated in the housing body 211. The cover plate 212 includes a first body 2121 and a mounting body 2122 connected to the first body 2121, the mounting body 2122 is provided with a pressure relief mechanism 213, and the pressure relief mechanism 213 is configured to be actuated when internal pressure or temperature of the battery cell reaches a threshold, so as to relieve the pressure; and in a thickness direction of the cover plate 212, at least part of the mounting body 2122 protrudes out of a surface of the first body 2121 facing the electrode assembly 22 in a direction approaching the electrode assembly 22; and a minimum distance between the pressure relief mechanism 213 and the electrode assembly 22 is less than a minimum distance between the first body 2121 and the electrode assembly 22.

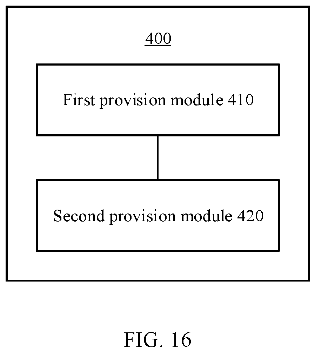

FIG. 16 is a schematic block diagram of a device 400 for manufacturing battery cell 20 according to an embodiment of this application. As shown in FIG. 16, the device 400 may include a first provision module 410 and a second provision module 420. The first provision module 410 is configured to provide an electrode assembly 22. The second provision module 420 is configured to provide a housing body 211 and a cover plate 212. The electrode assembly 22 is accommodated in the housing body 211. The cover 212 includes a first body 2121 and a mounting body 2122 connected to the first body 2121, where the mounting body 2122 is provided with a pressure relief mechanism 213, and the pressure relief mechanism 213 is configured to be actuated when internal pressure or temperature of the battery cell reaches a threshold, so as to relieve the pressure; and in a thickness direction of the cover plate 212, at least part of the mounting body 2122 protrudes out of a surface of the first body 2121 facing the electrode assembly 22 in a direction approaching the electrode assembly 22; and a minimum distance between the pressure relief mechanism 213 and the electrode assembly 22 is less than a minimum distance between the first body 2121 and the electrode assembly 22.

Although this application has been described with reference to the preferred embodiments, various modifications to this application and replacements with equivalents of the components herein can be made without departing from the scope of this application. In particular, as long as there is no structural conflict, the various technical features mentioned in the embodiments can be combined in any manners. This application is not limited to the specific embodiments disclosed in this specification, but includes all technical solutions falling within the scope of the claims.

## Claims

1. A battery cell, **characterized by** comprising:
an electrode assembly (22); and
a housing (21) configured to accommodate the electrode assembly (22), wherein a first wall (212) of the housing (21) comprises a first body (2121) and a mounting body (2122) connected to the first body (2121), the mounting body (2122) is provided with a pressure relief mechanism (213), and the pressure relief mechanism (213) is configured to be actuated when internal pressure or temperature of the battery cell reaches a threshold, so as to relieve the pressure; and
in a thickness direction of the first wall (212), at least part of the mounting body (2122) protrudes out of a surface of the first body (2121) facing the electrode assembly (22) in a direction approaching the electrode assembly (22); and a minimum distance between the pressure relief mechanism (213) and the electrode assembly (22) is less than a minimum distance between the first body (2121) and the electrode assembly (22).

2. The battery cell according to claim 1, **characterized in that** a thickness of at least part of the mounting body (2122) is greater than that of the first body (2121).

3. The battery cell according to claim 2, **characterized in that** the mounting body (2122) comprises a mounting portion (2122a) and a connecting portion (2122b), wherein the mounting portion (2122a) is configured for mounting the pressure relief mechanism (213), and thickness of the mounting portion (2122a) is greater than that of the connecting portion (2122b); and the connecting portion (2122b) is configured to connect the mounting portion (2122a) and the first body (2122).

4. The battery cell according to any one of claims 1 to 3, **characterized in that** the mounting body (2122) is provided with a pressure relief hole (2122c), and the pressure relief mechanism (213) covers the pressure relief hole (2122c) and is configured to be actuated when internal pressure or temperature of the battery cell reaches the threshold, so as to relieve the pressure via the pressure relief hole (2122c).

5. The battery cell according to claim 4, **characterized in that** the mounting body (2122) is provided with a first depression (2122d), wherein the first depression (2122d) is recessed from a surface of the mounting body (2122) facing the electrode assembly (22) in a direction leaving the electrode assembly (22), and at least part of the pressure relief mechanism (213) is accommodated in the first depression (2122d).

6. The battery cell according to claim 5, **characterized in that** a bottom face of the first depression (2122d) is closer to the electrode assembly (22) than the surface of the first body (2121) facing the electrode assembly (22).

7. The battery cell according to claim 5 or 6, **characterized in that** the bottom face of the first depression (2122d) is provided with the pressure relief hole (2122c).

8. The battery cell according to any one of claims 5 to 7, **characterized by** further comprising:
a protective piece (215) disposed on a side of the pressure relief hole (2122c) facing away from the electrode assembly (22) and configured to protect the pressure relief mechanism (213).

9. The battery cell according to claim 8, **characterized in that** a side of the mounting body (2122) facing away from the electrode assembly (22) is provided with a protrusion (2122e) surrounding the pressure relief hole (2122c), wherein the protrusion (2122e) protrudes out of a surface of the mounting body (2122) facing away from the electrode assembly (22) in a direction leaving the electrode assembly (22), and the protective piece (215) is disposed on a surface of the protrusion (2122e) facing away from the electrode assembly (22).

10. The battery cell according to claim 9, **characterized in that** the mounting body (2122) is provided with a second depression (2122f), wherein the second depression (2122f) is recessed from the surface of the mounting body (2122) facing away from the electrode assembly (22) in a direction approaching the electrode assembly (22), the pressure relief hole (2122c) runs through the bottom face of the first depression (2122d) and a bottom face of the second depression (2122f), and the protrusion (2122e) is located on the bottom face of the second depression (2122f).

11. The battery cell according to claim 10, **characterized in that** height of the protrusion (2122e) is less than depth of the second depression (2122f).

12. The battery cell according to any one of claims 1 to 10, **characterized in that** the mounting body (2122) and the first body (2121) are an integrally formed structure.

13. The battery cell according to claim 12, **characterized in that** the mounting body (2122) comprises a mounting portion (2122a) and a connecting portion (2122b), wherein the mounting portion (2122a) is configured for mounting the pressure relief mechanism (213), the connecting portion (2122b) is configured to connect the mounting portion (2122a) and the first body (2121), and thickness of the connecting portion (2122b) increases gradually from the first body (2121) to the mounting portion (2122a).

14. The battery cell according to any one of claims 1 to 13, **characterized in that** the first wall (212) further comprises a second body (2123), wherein the second body (2123) is connected to the first body (2121), the first body (2121) protrudes relative to the second body (2123) in a direction leaving the electrode assembly (22), and a recessed area is formed on the same side facing the electrode assembly (22), wherein the recessed area is configured for accommodating the pressure relief mechanism (213) and at least part of the mounting body (2122).

15. The battery cell according to claim 14, **characterized in that** the electrode assembly (22) comprises a body portion (221) and a tab (222); and
the first wall (212) is provided with an electrode terminal (214), wherein the electrode terminal (214) is configured to be electrically connected with the tab (222), and the recessed area is further configured for accommodating at least part of the tab (222).

16. The battery cell according to claim 15, **characterized in that** in the thickness direction, a minimum distance between the surface of the mounting body (2122) facing the electrode assembly (22) and the body portion (221) is a first distance, and a minimum distance between a surface of the second body (2123) facing the electrode assembly (22) and the body portion (221) is a second distance, wherein the second distance is less than or equal to the first distance.

17. The battery cell according to any one of claims 1 to 16, **characterized in that** the housing (21) comprises:
a housing body (211) provided with an opening, wherein the electrode assembly (22) is accommodated in the housing body (211); and
a cover plate (212) configured to cover the opening, wherein the first wall (212) is the cover plate (212).

18. A battery, **characterized by** comprising:
the battery cell according to any one of claims 1 to 17; and
a box, wherein the box is configured to accommodate a number of such battery cells.

19. An electric device, **characterized by** comprising the battery according to claim 18, wherein the battery is configured to provide electric energy for the electric device.

20. A method for manufacturing battery cell, **characterized by** comprising:
providing an electrode assembly (22); and
providing a cover plate (212) and a housing body (211), wherein the electrode assembly (22) is accommodated in the housing body (211), the cover plate (212) comprises a first body (2121) and a mounting body (2122) connected to the first body (2121), the mounting body (2122) is provided with a pressure relief mechanism (213), and the pressure relief mechanism (213) is configured to be actuated when internal pressure or temperature of the battery cell reaches a threshold, so as to relieve the pressure; and
in a thickness direction of the cover plate (212), at least part of the mounting body (2122) protrudes out of a surface of the first body (2121) facing the electrode assembly (22) in a direction approaching the electrode assembly (22); and a minimum distance between the pressure relief mechanism (213) and the electrode assembly (22) is less than a minimum distance between the first body (2121) and the electrode assembly (22).

21. A device for manufacturing battery cell, **characterized by** comprising:
a first provision module (410) configured to provide an electrode assembly (22); and
a second provision module (420) configured to provide a cover plate (212) and a housing body (211), wherein the electrode assembly (22) is accommodated in the housing body (211), the cover plate (212) comprises a first body (2121) and a mounting body (2122) connected to the first body (2121), the mounting body (2122) is provided with a pressure relief mechanism (213), and the pressure relief mechanism (213) is configured to be actuated when internal pressure or temperature of the battery cell reaches a threshold, so as to relieve the pressure; and
in a thickness direction of the cover plate (212), at least part of the mounting body (2122) protrudes out of a surface of the first body (2121) facing the electrode assembly (22) in a direction approaching the electrode assembly (22); and a minimum distance between the pressure relief mechanism (213) and the electrode assembly (22) is less than a minimum distance between the first body (2121) and the electrode assembly (22).
